# EUROPEAN PATENT APPLICATION

(11) **EP 1 762 551 A1**
(43) Date of publication of application: **14.03.2007**
(21) Application number: 06254603.1
(22) Date of filing: 04.09.2006
(51) Int. Cl.: C04B 35/80, C04B 35/628, C04B 35/577

(54) **Method to reduce oxidation in ceramic composites, method for fabricating a ceramic composite article and an article comprising a ceramic composite protective layer**

(30) Priority: 07.09.2005 US 220817
(71) Applicant: General Electric Company, Schenectady, NY 12345 (US)
(72) Inventor: Fareed, Ali Syed, Newark, Delaware 19711 (US); Miraj, Nikhil Shrirnivas, Newark, Delaware 19702 (US)
(74) Representative: Bedford, Grant Richard

(57) **Abstract**

A method for reducing oxidation in ceramic composites is provided. The method includes depositing (130) a first portion of a silicon carbide (SiC) matrix over at least a portion of an article using a first chemical vapor infiltration (CVI) process, depositing (140) a silicon (Si)-doped boron nitride (BN) layer within at least a portion of the SiC matrix using a second CVI process, and depositing (150) a second portion of the SiC matrix within at least a portion or continuation of the first portion of the SiC matrix using a third CVI process.

## Description

The present invention relates generally to ceramic composites, and, more particularly, to protecting composites from oxidation at high temperatures.

Materials suitable for extended periods of exposure to high temperature and/or high stress environments are desired for a variety of applications. A plurality of such materials exist, for example, coated, ceramic composite materials have been used in these conditions with varying degrees of success.

A composite material consists of two or more physically, and/or chemically, distinct constituents coupled together with an interface separating them. The constituents of such a composite do not dissolve or otherwise merge completely into each other. The composites, however, act synergistically with each other. Composite materials have characteristics that are not normally exhibited and may be unattainable by any of the constituents in isolation. Examples of performance features that may be improved through the use of composites include enhanced material strength, toughness, and/or heat resistance. At least some known composite materials include a continuous phase, known as a matrix and a dispersed, non-continuous phase known as a reinforcement. The reinforcement generally is harder and stronger than the matrix.

An example composite is a carbon-fiber reinforced silicon carbide matrix (C/SiC) ceramic composite typically used in applications that require high strength and heat resistance. Carbon fibers can retain their properties at high temperatures (for example, 1650 degrees C). Carbon fibers, however, may be prone to oxidation in such high temperature environments. The combination of a SiC matrix having a greater stiffness and oxidation resistance, in conjunction with an Interfacial coating and additional surface seal coating may provide protection for the carbon fibers.

In high temperature oxygen-rich environments, oxygen may infiltrate the ceramic composite matrix and react with the carbon fibers. The oxidation reaction weakens the carbon fibers and may subsequently weaken areas within the composite. Weakened areas can result in a loss of material and may eventually lead to a material failure. Barrier coatings such as a SiC matrix have proven moderately effective in retarding oxidation; however, oxidizing species may diffuse through the matrix coating to reach the carbon fiber.

In one aspect of the present invention, a method for reducing oxidation in ceramic composites is provided. The method includes depositing a first portion of a silicon carbide (SiC) matrix over at least a portion of an article using a first chemical vapor infiltration (CVI) process, depositing a silicon (Si)-doped boron nitride (BN) layer within at least a portion of the SiC matrix using a second CVI process, and depositing a second portion of the SiC matrix within at least a portion or in continuation of the first portion of the SiC matrix using a third CVI process.

In another aspect, a method for fabricating a ceramic composite article is provided. The method includes fabricating a carbon fiber preform article with a plurality of pre-determined dimensions, depositing a layer of pyrolytic carbon on the carbon fiber over at least a portion of the carbon fiber preform article, depositing a first portion of a silicon carbide (SiC) matrix on at least a portion of the reinforcing pyrolytic carbon layer using a first chemical vapor infiltration (CVI) process, depositing a silicon (Si)-doped boron nitride (BN) layer within at least a portion of the SiC matrix using a second CVI process, and depositing a second portion of the SiC matrix within at least a portion of the first portion or in continuation of the SiC matrix using a third CVI process.

In a further aspect, an article comprising a ceramic composite protective layer is provided. The layer includes a substrate comprised of a surface region, and a region of fiber bundles extending over at least a portion of the substrate infiltrated with a matrix material impregnated with an oxidizing agent.

Various aspects and embodiments of the present invention will now be described in connection with the accompanying drawing, in which:

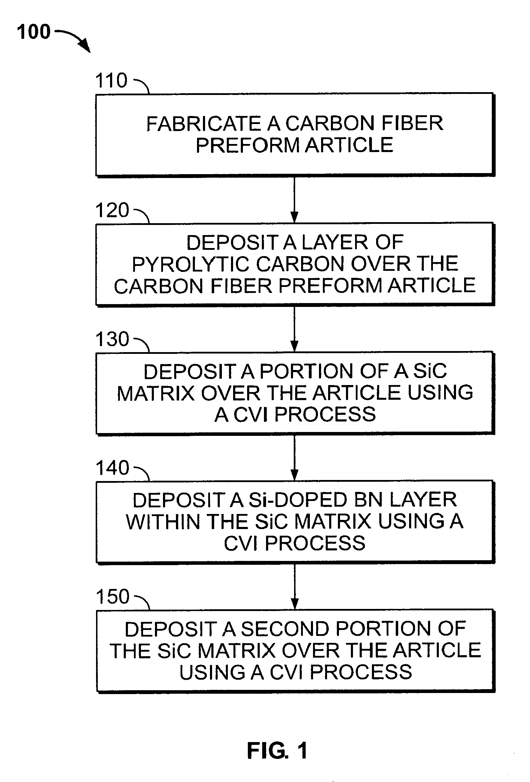

Figure 1 is a flow chart of an exemplary method for forming a composite protective layer.
Figure 1 is a flow chart of an exemplary method 100 for forming a composite protective layer.

A method step 110 of exemplary method 100 includes fabricating a carbon fiber preform article with a plurality of pre-determined dimensions that includes contours and thicknesses substantially similar to the dimensions of a finished article. The article is formed with a plurality of layers wherein the layers may have a plurality of pre-determined material densities that may be substantially homogeneous, or varied circumferentially and/or as a function of the contours of the article. The substrate primary interface for the subsequent layers is the surface of the article.

A method step 120 of exemplary method 100 includes depositing a layer of pyrolytic carbon over the surface of the substrate. The layer of carbon is deposited with a thickness that may be uniform and homogenous, or with a plurality of thicknesses that may be varied circumferentially and/or as a function of the contours of the article.

A method step 130 of exemplary method 100 includes depositing the first portion of a silicon carbide (SiC) matrix on the layer of pyrolytic carbon via a chemical vapor infiltration (CVI) process. In the CVI process, chemical reactants in vapor phase are introduced to the article and penetrate the porous substrate wherein a vapor phase reaction occurs. During this CVI process, a ceramic matrix is formed by the infiltration of the vapors into the porous substrate.

During the CVI process, the SiC matrix is deposited at pre-determined carbon (C)-to-silicon (Si) ratios that may be homogeneous about the surface of the article or varied circumferentially and/or as a function of the contours of the article. The SiC matrix may be deposited while maintaining isothermal conditions (for example, normally, CVI for SiC is conducted at approximately 1000 degrees C), or by varying the temperature of the preform wherein a pre-determined temperature gradient in the preform is maintained. Also, the SiC matrix may be deposited while the article is stationary or while the article is rotating about a pre-determined axis and at a pre-determined rate. The desired deposition rates and thicknesses are attained by controlling the temperature of the gaseous reactants, the pressure, the rate of flow of the reactants, the concentrations of the reactants, and the rate of removal of byproduct gases released by the reactions resulting from the interaction of the gaseous reactants with the substrate constituents.

A method step 140 of exemplary method 100 includes interrupting the deposition of the SiC matrix and depositing a silicon (Si)-doped boron nitride (BN) layer within the SiC matrix using a CVI process. The CVI BN coating is deposited uniformly around each fiber and/or fiber bundle. The BN coating remains relatively stable at high temperatures. On contact with oxygen at high temperatures, the BN coating reacts to form a B₂O₃ (and/or Si-B-O) glass layer, which uniformly surrounds the fiber bundles, thereby, inhibiting further oxygen diffusion and facilitating the prevention of fiber and/or interface oxidation. BN can be obtained from a variety of compounds, for example, borazine (B₃N₃H₆) or a mixture of boron trichloride (BCl₃) and ammonia (NH₃).

A method step 150 of exemplary method 100 includes continuing the CVI SiC matrix deposition once the BN layer is completely deposited. The CVI process for finishing the SiC matrix deposition may be identical to that used for the first deposition or the parameters may be adjusted to account for the prior discontinuation of the matrix deposition and the introduction of the BN layer in the matrix.

The ceramic composite fabrication methods described herein facilitates reducing the oxidation of ceramic composite articles. More specifically, the glass layer described above prevents further diffusion of oxygen. As a result, the degradation of the ceramic composite articles and increased maintenance costs caused by article damage can be reduced or eliminated.

Although the methods described and/or illustrated herein are described and/or illustrated with respect to fabricating a ceramic composite article, and more specifically, a C/SiC ceramic composite, practice of the methods described and/or illustrated herein is not limited to C/SiC ceramic composite articles nor to composites reinforced with fibers other than carbon nor to ceramic composites generally. Rather, the methods described and/or illustrated herein are applicable to fabricating any article of any material.

Exemplary embodiments of C/SiC ceramic composites are described above in detail. The methods, apparatus and systems are not limited to the specific embodiments described herein nor to the specific C/SiC articles fabricated, but rather, the methods of fabricating ceramic composites may be utilized independently and separately from other methods, apparatus and systems described herein or to fabricate ceramic composites not described herein. For example, other ceramic composites can also be assembled using the methods described herein.

While the invention has been described in terms of various specific embodiments, those skilled in the art will recognize that the invention can be practiced with modification within the spirit and scope of the claims.

**PARTS LIST**

| | |
|---|---|
| 100 | Method for forming a composite protective layer |
| 110 | Fabricating a carbon fiber preform article with a plurality of pre-determined dimensions that includes contours and thicknesses substantially similar to the dimensions of a finished article |
| 120 | Depositing a layer of pyrolytic carbon over the surface of the substrate |
| 130 | Depositing the first portion of a silicon carbide (SiC) matrix on the layer of pyrolytic carbon via a chemical vapor infiltration (CVI) process |
| 140 | Interrupting the deposition of the SiC matrix and depositing a silicon (Si)-doped boron nitride (BN) layer within the SiC matrix using a CVI process |
| 150 | Continuing the CVI SiC matrix deposition once the BN layer is completely deposited |

## Claims

1. A method to reduce oxidation in ceramic composites, said method comprising:
depositing (130) a first portion of a silicon carbide (SiC) matrix over at least a portion of an article using a first chemical vapor infiltration (CVI) process;
depositing (140) a silicon (Si)-doped boron nitride (BN) layer within at least a portion of the SiC matrix using a second CVI process; and
depositing (150) a second portion of the SiC matrix within at least a portion or in continuation of the first portion of the SiC matrix using a third CVI process.

2. A method to reduce oxidation in ceramic composites in accordance with Claim 1 wherein said depositing (120) a first portion of a SiC matrix over at least a portion of an article using a first CVI process comprises:
depositing the SiC matrix at pre-determined carbon (C)-to-silicon (Si) ratios that may be homogeneous about the surface of the article or varied circumferentially and/or as a function of the contours of the article;
depositing the SiC matrix while maintaining isothermal conditions, or varying the temperature of the article wherein a pre-determined temperature gradient in the article is maintained; and
depositing the SiC matrix while the article is stationary or while the article is rotating about a pre-determined axis and at a pre-determined rate.

3. A method to reduce oxidation in ceramic composites in accordance with Claim 2 wherein said depositing the SiC matrix at pre-determined C-to-Si ratios comprises controlling a plurality of first CVI process conditions which further comprises controlling a temperature of a plurality of gaseous reactants, a pressure, a rate of flow of the plurality of reactants, a plurality of concentrations of the plurality of reactants, and a rate of removal of a plurality of concentrations of a plurality of byproduct gases released by a plurality of reactions.

4. A method for fabricating a ceramic composite article, said method comprising:
fabricating (110) a carbon fiber preform article with a plurality of pre-determined dimensions;
depositing (120) a layer of pyrolytic carbon over at least a portion of the carbon fiber preform article;
depositing (130) a first portion of a silicon carbide (SiC) matrix on at least a portion of the reinforcing layer using a first chemical vapor infiltration (CVI) process;
depositing (140) a silicon (Si)-doped boron nitride (BN) layer within at least a portion of the SiC matrix using a second CVI process; and
depositing (150) a second portion of the SiC matrix within at least a portion or in continuation of the first portion of the SiC matrix using a third CVI process.

5. An article comprising a ceramic composite protective layer, said layer comprising:
a substrate comprised of a surface region; and
a region of fiber bundles extending over at least a portion of said substrate infiltrated with a matrix material impregnated with an oxidizing agent.

6. An article comprising a ceramic composite protective layer in accordance with Claim 5 wherein said substrate further comprises a carbon fiber preform with pre-determined dimensions.

7. An article comprising a ceramic composite protective layer in accordance with Claim 6 wherein said carbon fiber preform with pre-determined dimensions comprises:
an article pre-shaped to a set of pre-determined contours and thicknesses substantially similar to the dimensions of a finished article; and
a plurality of layers wherein said layers may have a plurality of pre-determined material densities that may be substantially homogeneous, or varied circumferentially and/or as a function of said contours of said article.

8. An article comprising a ceramic composite protective layer in accordance with Claim 5 or any claim dependent thereon wherein said region of fiber bundles extending over at least a portion of said substrate infiltrated with a matrix material impregnated with an oxidizing agent comprises a layer of reinforcing carbon fiber bundles deposited over at least a portion of said preform.

9. An article comprising a ceramic composite protective layer in accordance with Claim 5 or any claim dependent thereon wherein said region of fiber bundles extending over at least a portion of said substrate infiltrated with a matrix material impregnated with an oxidizing agent comprises a silicon carbide (SiC) matrix impregnated with a boron nitride (BN) oxidizing agent.

10. An article comprising a ceramic composite protective layer in accordance with Claim 9 wherein said SiC matrix impregnated with a BN oxidizing agent may be deposited at pre-determined carbon (C)-to-silicon (Si) ratios that may be homogeneous about said surface region of the article or varied circumferentially and/or as a function of the contours of the article.
